# EUROPEAN PATENT APPLICATION

(11) **EP 4 836 028 A1**
(43) Date of publication of application: **04.11.2026**
(21) Application number: 24913705.0
(22) Date of filing: 27.12.2024
(51) Int. Cl.: H01M 4/96, H01M 8/18, D01F 9/12

(54) **ELECTRODE FOR VANADIUM REDOX FLOW BATTERY AND VANADIUM REDOX FLOW BATTERY COMPRISING SAME**

(30) Priority: 27.12.2023 KR 20230193488
(71) Applicant: JNTG Co., Ltd., Gyeonggi-do 18523 (KR)
(72) Inventor: LEE, Eun Sook, Suwon-si, Gyeonggi-do 16336 (KR); SONG, Ho Seon, Hwaseong-si, Gyeonggi-do 18392 (KR); JYOUNG, Jy Young, Suwon-si, Gyeonggi-do 16664 (KR); AHN, Ki Cheol, Hwaseong-si, Gyeonggi-do 18392 (KR); LEE, Seung Hyun, Hwaseong-si, Gyeonggi-do 18392 (KR); KIM, Do Hun, Osan-si, Gyeonggi-do 18133 (KR)
(74) Representative: Santarelli
(86) International application number: PCT/KR2024/021330
(87) International publication number: WO 2025/143901

(57) **Abstract**

An electrode for a vanadium redox flow battery and a vanadium redox flow battery including the same are disclosed. The disclosed electrode for a vanadium redox flow battery includes a first carbon fiber having a diameter of 9 to 11 µm and a second carbon fiber having a diameter of 6 to 8 µm.

## Description

### Technical Field

The present disclosure relates to an electrode for a vanadium redox flow battery and a vanadium redox flow battery including the same. More specifically, disclosed are an electrode for a vanadium redox flow battery having low electrical resistance and a large surface area, and a vanadium redox flow battery including the same.

### Background Art

Vanadium redox flow batteries (VRFBs) have advantages in that their output and energy capacity can be designed independently, and they have a long lifespan and high safety, and are therefore attracting attention as next-generation energy storage apparatuses.

The basic structure of a vanadium redox flow battery includes electrolyte tanks in which vanadium active materials having different oxidation states are stored, a pump responsible for flow rate control and circulation, electrodes providing a place where active materials react, and an ion exchange membrane responsible for separating the two electrodes and for the movement of hydrogen ions (H⁺).

Unlike conventional secondary batteries, in a vanadium redox flow battery, an electrolyte is not contained within a cell but is stored in a liquid state in an external reservoir, namely a tank, and is supplied into the cell by using a pump during the charging and discharging process. Since the energy capacity exhibited in a battery is determined by the amount of electrolyte contained in the storage vessel, and the output is determined according to the size and number of single cells including electrodes, the magnitudes of the energy capacity and the output can be readily controlled. During charging, tetravalent vanadium ions (VO²⁺) at the positive electrode are oxidized to pentavalent vanadium ions (VO₂⁺), and trivalent vanadium ions (V³⁺) at the negative electrode are reduced to divalent vanadium ions (V²⁺), thereby producing electrical energy by using the resulting difference in oxidation/reduction potentials of the ions in the electrolyte. During discharging, the process proceeds in the reverse direction as the oxidation number of the vanadium ions changes, and the chemical reaction equations for charging and discharging are as follows. In the chemical reaction equations below, "SHE" is an abbreviation for "standard hydrogen electrode."
- Positive electrode: VO²⁺ + H₂O → VO₂⁺ + 2H⁺ + e⁻ (1.00 V vs. SHE)
- Negative electrode: V³⁺ + e⁻ ↔ V²⁺ (-0.26 V vs. SHE)

In such a vanadium redox flow battery, the electrode is very important, and carbon felt (CF) is most widely used.

Conventional carbon felt electrodes exhibit high electrical resistance and small surface areas, resulting in low voltage efficiency and low energy efficiency.

### Disclosure of the Invention

### Technical Problem

One embodiment of the present disclosure provides an electrode for a vanadium redox flow battery that has a low electrical resistance while having a large surface area.

Another embodiment of the present disclosure provides a vanadium redox flow battery including the electrode for a vanadium redox flow battery.

### Technical Solution

One aspect of the present disclosure provides an electrode for a vanadium redox flow battery, the electrode including:
a first carbon fiber having a diameter of 9 to 11 µm; and
a second carbon fiber having a diameter of 6 to 8 µm.

A weight ratio of the first carbon fiber to the second carbon fiber may be 50 to 80:20 to 50.

The first carbon fiber and the second carbon fiber may each independently include a polyacrylonitrile (PAN)-based carbon fiber, a rayon-based carbon fiber, a pitch-based carbon fiber, or a combination thereof.

The electrode for a vanadium redox flow battery may have a thickness of 1 to 5 mm.

A total number of the first carbon fibers and the second carbon fibers per unit weight of the electrode for a vanadium redox flow battery may be 120,000 ea/g or more.

A total surface area of the first carbon fibers and the second carbon fibers per unit weight of the electrode for a vanadium redox flow battery may be 1,500 cm²/g or more.

A density of the electrode for a vanadium redox flow battery may be 0.08 to 0.12 g/cm³.

Another aspect of the present disclosure provides
a vanadium redox flow battery including the electrode for a vanadium redox flow battery.

### Advantageous Effects

An electrode for a vanadium redox flow battery according to an embodiment of the present disclosure has a low electrical resistance and a large surface area, so that voltage efficiency and energy efficiency are improved, and electrical resistance can be reduced.

### Brief Description of the Drawings

FIG. 1 is a view for explaining a method of measuring the electrical resistance of an electrode for a vanadium redox flow battery according to an embodiment of the present disclosure.
FIG. 2 is a view showing an apparatus for evaluating, by cyclic voltammetry, the performance of an electrode for a vanadium redox flow battery according to an embodiment of the present disclosure.
FIG. 3 is a graph showing a cyclic voltammogram obtained using the apparatus of FIG. 2.
FIG. 4 is a view showing an apparatus for evaluating the performance of a unit cell including an electrode for a vanadium redox flow battery according to an embodiment of the present disclosure.

### Mode for Carrying Out the Invention

Hereinafter, an electrode for a vanadium redox flow battery according to an embodiment of the present disclosure and a vanadium redox flow battery including the same will be described in detail.

In the present specification, "carbon fiber" refers to a fiber prepared by carbonizing a polyacrylonitrile (PAN)-based oxidized fiber, a rayon-based oxidized fiber, a pitch-based oxidized fiber, or a combination thereof through a carbonization process at 600 to 1,000 °C, and then graphitizing the same through a graphitization process at 1,300 to 2,400 °C. When the temperature of the carbonization process and the temperature of the graphitization process are each within these ranges, the carbon fibers may have the same size, structure, and properties.

An electrode for a vanadium redox flow battery according to an embodiment of the present disclosure includes a first carbon fiber having a diameter of 9 to 11 µm and a second carbon fiber having a diameter of 6 to 8 µm. When the diameter of the first carbon fiber and the diameter of the second carbon fiber are each within these ranges, an electrode for a vanadium redox flow battery in which electrical resistance is reduced and both the total number and the total surface area of the first carbon fibers and the second carbon fibers per unit weight are increased can be obtained.

A weight ratio of the first carbon fiber to the second carbon fiber may be 50 to 80:20 to 50. When the weight ratio of the first carbon fiber to the second carbon fiber is within the above range, an electrode for a vanadium redox flow battery in which electrical resistance is reduced and both the total number and the total surface area of the first carbon fiber and the second carbon fiber per unit weight are increased can be obtained.

The first carbon fiber and the second carbon fiber may each independently include a polyacrylonitrile (PAN)-based carbon fiber, a rayon-based carbon fiber, a pitch-based carbon fiber, or a combination thereof.

Additionally, the electrode for a vanadium redox flow battery may have a thickness of 1 to 5 mm, for example, 1 to 3 mm.

The total number of the first carbon fibers and the second carbon fibers per unit weight of the electrode for a vanadium redox flow battery may be 120,000 ea/g or more. As such, when the total number of the first carbon fibers and the second carbon fibers per unit weight of the electrode for a vanadium redox flow battery increases, the connectivity between the fibers increases, which results in a reduction in the electrical resistance of the electrode, which in turn increases the mobility of electrons during charging and discharging in a vanadium redox flow battery including the electrode, resulting in improved efficiency during battery operation.

Additionally, the total surface area of the first carbon fibers and the second carbon fibers per unit weight of the electrode for a vanadium redox flow battery may be 1,500 cm²/g or more. As such, when the total surface area of the first carbon fibers and the second carbon fiber per unit weight of the electrode for a vanadium redox flow battery increases, the surface area of the electrode on which active species (vanadium ions having various oxidation numbers) can be generated increases, thereby promoting a rapid reaction of the active species at a high current, so that the efficiency of a vanadium redox flow battery including the electrode can be improved.

The density of the electrode for a vanadium redox flow battery may be 0.08 to 0.12 g/cm³. When the density of the electrode for a vanadium redox flow battery is within the above range, the electrolyte exhibits improved flowability compared with a case in which the density exceeds the above range, thereby maintaining high voltage efficiency, energy efficiency, and charge-discharge capacity in a vanadium redox flow battery including the electrode.

Another aspect of the present disclosure provides a vanadium redox flow battery including the electrode for a vanadium redox flow battery as described above.

Hereinafter, the present disclosure will be described with reference to the following examples, but the present disclosure is not limited only to the following examples.

### Example 1: Preparation of electrode for vanadium redox flow battery

A total of 300 kg of polyacrylonitrile (PAN)-based oxidized fibers (Zoltek, OX staple fiber) were fed into a fuel inlet in a felt manufacturing line. Specifically, first PAN-based oxidized fibers having a length of 60 mm and a diameter of 14.5 µm and second PAN-based oxidized fibers having a length of 60 mm and a diameter of 10.5 µm were mixed and fed in a weight ratio of 65:35. Thereafter, the fed PAN-based oxidized fibers were transferred to a mixing tank and mixed for 30 minutes while introducing air. Thereafter, in order to disperse the mixed PAN-based oxidized fibers without entangling with each other, they were mechanically dispersed by passing the same through a can equipped with wires, and then prepared into a sheet of a certain thickness. The prepared sheet was cut to a certain size and 18 sheets were laminated, and in order to weave the laminated sheets together, they were punched with a grooved needle to prepare a PAN-based oxidized fiber felt. Thereafter, the prepared PAN-based oxidized fiber felt was carbonized through a carbonization process at 800 °C and graphitized through a graphitization process at 1,700 °C to prepare a PAN-based carbon fiber felt. Thereafter, the prepared PAN-based carbon fiber felt was activated through a thermal oxidation process at 700 °C in an oxygen atmosphere to obtain an electrode for a vanadium redox flow battery.

### Example 2: Preparation of electrode for vanadium redox flow battery

An electrode for a vanadium redox flow battery was prepared in the same manner as in Example 1 above, except that first PAN-based oxidized fibers having a length of 60 mm and a diameter of 13 µm were used instead of first PAN-based oxidized fibers having a length of 60 mm and a diameter of 14.5 µm.

### Example 3: Preparation of electrode for vanadium redox flow battery

An electrode for a vanadium redox flow battery was prepared in the same manner as in Example 1 above, except that first PAN-based oxidized fibers having a length of 60 mm and a diameter of 16 µm were used instead of first PAN-based oxidized fibers having a length of 60 mm and a diameter of 14.5 µm.

### Example 4: Preparation of electrode for vanadium redox flow battery

An electrode for a vanadium redox flow battery was prepared in the same manner as in Example 1 above, except that second PAN-based oxidized fibers having a length of 60 mm and a diameter of 9 µm were used instead of second PAN-based oxidized fibers having a length of 60 mm and a diameter of 10.5 µm.

### Example 5: Preparation of electrode for vanadium redox flow battery

An electrode for a vanadium redox flow battery was prepared in the same manner as in Example 1 above, except that second PAN-based oxidized fibers having a length of 60 mm and a diameter of 12 µm were used instead of second PAN-based oxidized fibers having a length of 60 mm and a diameter of 10.5 µm.

### Example 6: Preparation of electrode for vanadium redox flow battery

An electrode for a vanadium redox flow battery was prepared in the same manner as in Example 1 above, except that first PAN-based oxidized fibers having a length of 60 mm and a diameter of 14.5 µm and second PAN-based oxidized fibers having a length of 60 mm and a diameter of 10.5 µm were used in a weight ratio of 50:50.

### Example 7: Preparation of electrode for vanadium redox flow battery

An electrode for a vanadium redox flow battery was prepared in the same manner as in Example 1 above, except that first PAN-based oxidized fibers having a length of 60 mm and a diameter of 14.5 µm and second PAN-based oxidized fibers having a length of 60 mm and a diameter of 10.5 µm were used in a weight ratio of 80:20.

### Example 8: Preparation of electrode for vanadium redox flow battery

An electrode for a vanadium redox flow battery was prepared in the same manner as in Example 1 above, except that rayon-based oxidized fibers (Rontek, polyester staple fiber) were used instead of polyacrylonitrile (PAN)-based oxidized fibers (Zoltek, OX staple fiber). Specifically, first rayon-based oxidized fibers having a length of 60 mm and a diameter of 14.5 µm and second rayon-based oxidized fibers having a length of 60 mm and a diameter of 10.5 µm were used in a weight ratio of 65:35.

### Example 9: Preparation of electrode for vanadium redox flow battery

An electrode for a vanadium redox flow battery was prepared in the same manner as in Example 1 above, except that pitch-based oxidized fibers (Osaka Gas, OG) were used instead of polyacrylonitrile (PAN)-based oxidized fibers (Zoltek, OX staple fiber). Specifically, first pitch-based oxidized fibers having a length of 60 mm and a diameter of 14.5 µm and second pitch-based oxidized fibers having a length of 60 mm and a diameter of 10.5 µm were used in a weight ratio of 65:35.

### Reference Example 1: Preparation of electrode for vanadium redox flow battery

An electrode for a vanadium redox flow battery was prepared in the same manner as in Example 1 above, except that first PAN-based oxidized fibers having a length of 60 mm and a diameter of 12 µm were used instead of first PAN-based oxidized fibers having a length of 60 mm and a diameter of 14.5 µm.

### Reference Example 2: Preparation of electrode for vanadium redox flow battery

An electrode for a vanadium redox flow battery was prepared in the same manner as in Example 1 above, except that first PAN-based oxidized fibers having a length of 60 mm and a diameter of 17 µm were used instead of first PAN-based oxidized fibers having a length of 60 mm and a diameter of 14.5 µm.

### Reference Example 3: Preparation of electrode for vanadium redox flow battery

An electrode for a vanadium redox flow battery was prepared in the same manner as in Example 1 above, except that second PAN-based oxidized fibers having a length of 60 mm and a diameter of 8 µm were used instead of second PAN-based oxidized fibers having a length of 60 mm and a diameter of 10.5 µm.

### Reference Example 4: Preparation of electrode for vanadium redox flow battery

An electrode for a vanadium redox flow battery was prepared in the same manner as in Example 1 above, except that second PAN-based oxidized fibers having a length of 60 mm and a diameter of 13 µm were used instead of second PAN-based oxidized fibers having a length of 60 mm and a diameter of 10.5 µm.

### Reference Example 5: Preparation of electrode for vanadium redox flow battery

An electrode for a vanadium redox flow battery was prepared in the same manner as in Example 1 above, except that first PAN-based oxidized fibers having a length of 60 mm and a diameter of 14.5 µm and second PAN-based oxidized fibers having a length of 60 mm and a diameter of 10.5 µm were used at a weight ratio of 40:60.

### Reference Example 6: Preparation of electrode for vanadium redox flow battery

An electrode for a vanadium redox flow battery was prepared in the same manner as in Example 1 above, except that first PAN-based oxidized fibers having a length of 60 mm and a diameter of 14.5 µm and second PAN-based oxidized fibers having a length of 60 mm and a diameter of 10.5 µm were used at a weight ratio of 90:10.

### Comparative Example 1: Preparation of electrode for vanadium redox flow battery

An electrode for a vanadium redox flow battery was prepared in the same manner as in Example 1 above, except that first PAN-based oxidized fibers having a length of 60 mm and a diameter of 14.5 µm and second PAN-based oxidized fibers having a length of 60 mm and a diameter of 10.5 µm were used at a weight ratio of 100:0.

### Comparative Example 2: Preparation of electrode for vanadium redox flow battery

An electrode for a vanadium redox flow battery was prepared in the same manner as in Example 1 above, except that first PAN-based oxidized fibers having a length of 60 mm and a diameter of 14.5 µm and second PAN-based oxidized fibers having a length of 60 mm and a diameter of 10.5 µm were used at a weight ratio of 0:100.

The preparation conditions of the electrodes for a vanadium redox flow battery (VRFB electrodes) prepared in Examples 1 to 9, Reference Examples 1 to 6, and Comparative Examples 1 to 2 are summarized in Table 1 below.

**[Table 1]**

| | Type of oxidized fibers | Diameter of first oxidized fibers (µm) | Diameter of second oxidized fibers (µm) | Weight ratio of first oxidized fibers to second oxidized fibers |
|---|---|---|---|---|
| Example 1 | PAN-based | 14.5 | 10.5 | 65:35 |
| Example 2 | PAN-based | 13.0 | 10.5 | 65:35 |
| Example 3 | PAN-based | 16.0 | 10.5 | 65:35 |
| Example 4 | PAN-based | 14.5 | 9.0 | 65:35 |
| Example 5 | PAN-based | 14.5 | 12.0 | 65:35 |
| Example 6 | PAN-based | 14.5 | 10.5 | 50:50 |
| Example 7 | PAN-based | 14.5 | 10.5 | 80:20 |
| Example 8 | Rayon-based | 14.5 | 10.5 | 65:35 |
| Example 9 | Pitch-based | 14.5 | 10.5 | 65:35 |
| Reference Example 1 | PAN-based | 12.0 | 10.5 | 65:35 |
| Reference Example 2 | PAN-based | 17.0 | 10.5 | 65:35 |
| Reference Example 3 | PAN-based | 14.5 | 8.0 | 65:35 |
| Reference Example 4 | PAN-based | 14.5 | 13.0 | 65:35 |
| Reference Example 5 | PAN-based | 14.5 | 10.5 | 40:60 |
| Reference Example 6 | PAN-based | 14.5 | 10.5 | 90:10 |
| Comparative | PAN-based | 14.5 | 10.5 | 100:0 |
| Example 1 | | | | |
| Comparative Example 2 | PAN-based | 14.5 | 10.5 | 0:100 |

### Evaluation Example 1: Evaluation of characteristics of electrodes for vanadium redox flow battery

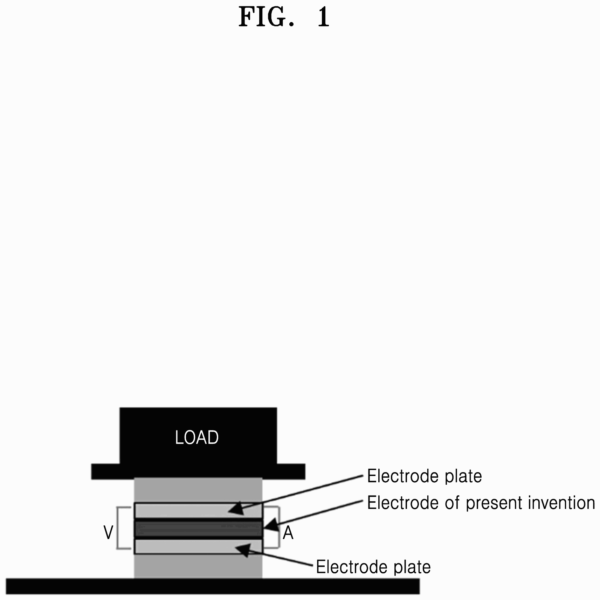

The characteristics of each of the electrodes for a vanadium redox flow battery prepared in Examples 1 to 9, Reference Examples 1 to 6, and Comparative Examples 1 to 2 were evaluated by the following methods, and the results are shown in Table 2 below.
(1) Thickness of electrode (mm): The thickness of the electrode for a vanadium redox flow battery was measured using a dial thickness gauge manufactured by Mitsutoyo.
(2) Diameter of one strand of carbon fiber (µm): After photographing the carbon fiber felt with a scanning electron microscope (SEM) to obtain an SEM image, the SEM image was analyzed to measure the average diameter of the first carbon fibers and the average diameter of the second carbon fibers, respectively, and each average diameter was recorded as the diameter of the first carbon fiber and the diameter of the second carbon fiber. At this time, since the diameter of one strand of the first carbon fiber and the diameter of one strand of the second carbon fiber differ by 1 µm or more, the first carbon fiber and the second carbon fiber can be easily distinguished from each other.
(3) Weight of one strand of carbon fiber (g): The weight of one strand of carbon fiber included in the electrode for a vanadium redox flow battery was obtained by multiplying the theoretical density of the carbon fiber (1.8 g/cm³) by the volume of one strand of fiber (length: 60 mm, diameter of each carbon fiber).
(4) Number of carbon fibers (ea/g): The number of carbon fibers included in the electrode for a vanadium redox flow battery was obtained by dividing the weight of the electrode for a vanadium redox flow battery by the weight of one strand of carbon fiber (length: 60 mm).
(5) Surface area of one strand of carbon fiber (cm²): Since the shape of one strand of carbon fiber is a cylindrical shape, the surface area of one strand of carbon fiber (length: 60 mm) can be easily calculated from the length of 60 mm and the diameter of the carbon fiber measured in (2) above.
(6) Total surface area of carbon fibers (cm²/g): The total surface area of the carbon fibers included in the electrode for a vanadium redox flow battery was obtained by multiplying the number of carbon fibers obtained in (4) above by the surface area of one strand of carbon fiber calculated in (5) above.
(7) Density of the electrode (g/cm³): The density of the electrode was calculated by dividing the measured basis weight of the electrode (g/cm²) by the thickness of the electrode (cm) measured in (1) above.
(8) Electrical resistance of the electrode (mΩ·cm²): As shown in FIG. 1, an electrode for a vanadium redox flow battery was positioned between a pair of electrode plates, and then a load was applied to compress the same by 20% relative to the initial thickness of the electrode, and in this state, a current (A) corresponding to a current density of 1.0 A/cm² was applied to the pair of electrode plates to measure the voltage (V), and then the measured voltage was divided by the applied current to obtain the electrical resistance.

**[Table 2]**

| | Thickness of electrode (mm) | Diameter of one strand of carbon fiber (µm) | | Number of carbon fibers (ea/g) | Total surface area of carbon fiber (cm²/g) | Density of electrode (g/cm³) | Electrical resistance of electrode (mΩ·cm²) |
|---|---|---|---|---|---|---|---|
| | | First carbon fiber | Second carbon fiber | | | | |
| Example 1 | 2.52 | 10 | 7 | 160,921 | 2,556 | 0.095 | 131 |
| Example 2 | 2.53 | 9 | 7 | 178,905 | 2,716 | 0.096 | 115 |
| Example 3 | 2.55 | 11 | 7 | 147,615 | 2,424 | 0.096 | 128 |
| Example 4 | 2.56 | 10 | 6 | 191,345 | 2,741 | 0.094 | 103 |
| Example 5 | 2.51 | 10 | 8 | 141,174 | 2,417 | 0.097 | 127 |
| Example 6 | 2.48 | 10 | 7 | 179,336 | 2,699 | 0.098 | 112 |
| Example 7 | 2.56 | 10 | 7 | 142,506 | 1,542 | 0.090 | 145 |
| Example 8 | 2.51 | 10 | 7 | 175,550 | 2,788 | 0.095 | 133 |
| Example 9 | 2.46 | 10 | 7 | 137,932 | 2,191 | 0.093 | 147 |
| Reference Example 1 | 2.53 | 8 | 7 | 204,047 | 2,917 | 0.084 | 149 |
| Reference Example 2 | 2.55 | 12 | 7 | 137,494 | 2,315 | 0.094 | 147 |
| Reference Example 3 | 2.56 | 10 | 5 | 241,802 | 3,000 | 0.088 | 163 |
| Reference Example 4 | 2.55 | 10 | 9 | 127,636 | 2,309 | 0.084 | 168 |
| Reference Example 5 | 2.52 | 10 | 7 | 191,612 | 2,794 | 0.087 | 151 |
| Reference Example 6 | 2.50 | 10 | 7 | 130,229 | 2,318 | 0.094 | 158 |
| Comparative Example 1 | 2.59 | 10 | - | 117,952 | 2,222 | 0.085 | 178 |
| Comparative Example 2 | 2.59 | - | 7 | 240,719 | 3,175 | 0.074 | 157 |

### Evaluation Example 2: Performance Evaluation of Electrodes for Vanadium Redox Flow Batteries

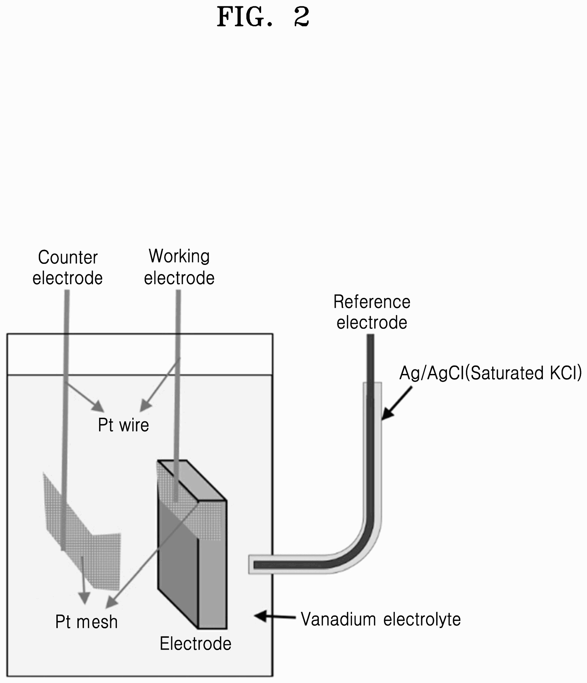

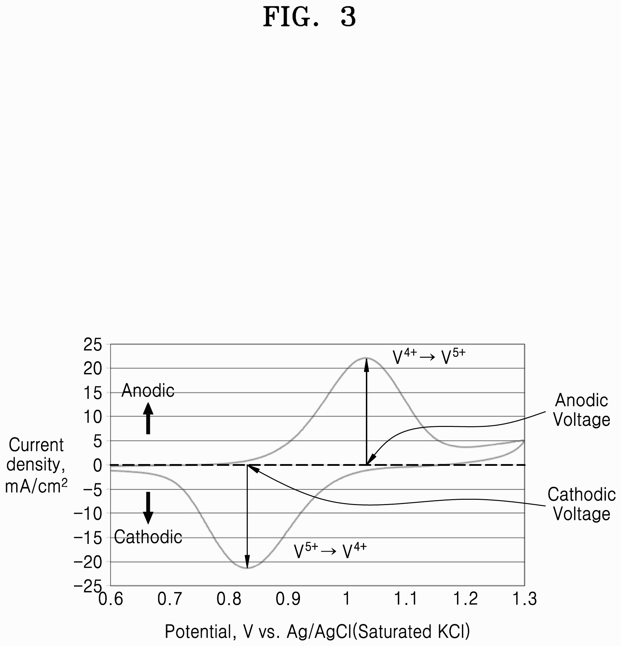

Each of the electrodes for vanadium redox flow batteries prepared in Examples 1 to 9, Reference Examples 1 to 6, and Comparative Examples 1 to 2 was evaluated by cyclic voltammetry as follows, and the results are shown in Table 4 below.
(1) Measurement of ΔEp (mV): Each of the electrodes for vanadium redox flow batteries (electrode size: 5 cm²) was fixed with a Pt mesh included in a working electrode and set up as shown in FIG. 2. At this time, a 3M sulfuric acid/25 mM V⁴⁺/V⁵⁺ vanadium electrolyte was used as the electrolyte. Thereafter, each electrode was connected to a cyclic voltammetry apparatus (METEK, VERSASTAT3), and a voltage was applied; the current between the working electrode and a reference electrode was measured while repeating the process of increasing the applied voltage from 0.6 V to 1.3 V and then decreasing it again from 1.3 V to 0.6 V. When the current measurement was completed, a graph such as that shown in FIG. 3 was obtained, and ΔEp was calculated according to Equation 1 below by analyzing the graph. Here, ΔEp is a value representing the difference between the oxidation potential and the reduction potential, and serves as an indicator of how rapidly the redox reaction occurs at the electrode and how rapidly electrons generated by the reaction are transferred. [Equation 1] 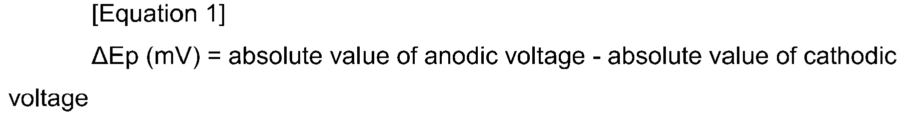 ΔEp (mV) = absolute value of anodic voltage - absolute value of cathodic voltage
(2) Measurement of current density (mA/cm²): In the graph of FIG. 3, the maximum value of the anodic-side peak was recorded as the anodic peak intensity, and the maximum value of the cathodic-side peak was recorded as the cathodic peak intensity. In addition, in the graph of FIG. 3, the anodic region (0.6 V to 1.3 V) is the region where V⁴⁺ is oxidized to V⁵⁺, and the cathodic region (1.3 V to 0.6 V) is the region where V⁵⁺ is reduced to V⁴⁺. Here, the values of the current density (anodic peak intensity and cathodic peak intensity) are numerical values representing the magnitude of the current at each peak in the graph of FIG. 3, and are indicators representing the amount or degree of reaction of vanadium with the electrode.

### Evaluation Example 3: Performance evaluation of vanadium redox flow battery

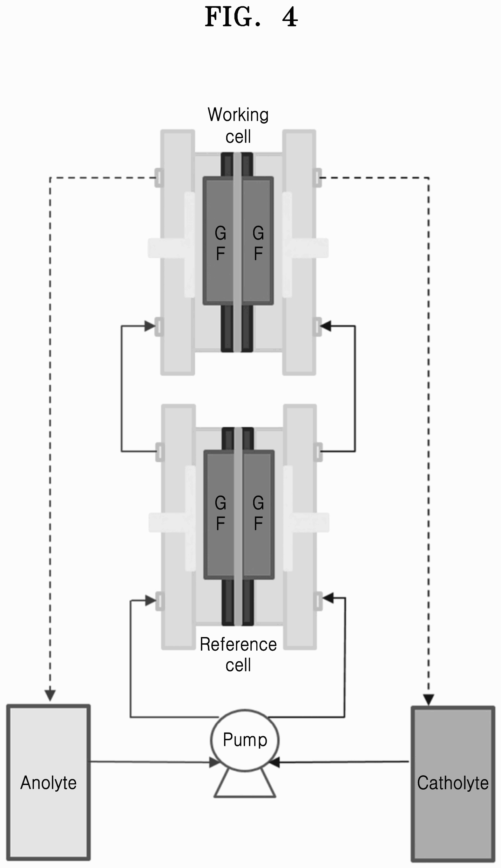

Unit cells respectively including the electrodes for a vanadium redox flow battery prepared in Examples 1 to 9, Reference Examples 1 to 6, and Comparative Examples 1 to 2 were constructed. Specifically, after constructing a working cell and a reference cell, the cells were set as shown in FIG. 4. In addition, the evaluation conditions and evaluation methods of each of the unit cells are shown in Table 3 below. However, a current was applied to the working cell, but no current was applied to the reference cell. While performing the charge-discharge cycles of Table 3 below, the voltage efficiency, energy efficiency, and R50 were evaluated as follows, and the results are shown in Table 4 below.

**[Table 3]**

| | Conditions |
|---|---|
| Test type | State of cell (SOC) test |
| Membrane | Commercial separator membrane (DuPont, N117) |
| Electrolyte | 1.6M Vanadium, 4.2M H₂SO₄, |
| Electrode surface area | 24.5 cm² |
| Cut-off range | 1.0 to 1.65 V (@ charge) / 1.65 to 1.0 V (@ discharge) |
| Current density | Constant Current mode, 110mA/cm² |

(1) Evaluation of Coulombic efficiency (%): The Coulombic efficiency was evaluated according to Equation 2 below. [Equation 2] $Coulombic efficiency \left(%\right) = discharge capacity / charge capacity \times 100$
(2) Evaluation of energy efficiency (%): The energy efficiency was evaluated according to Equation 3 below. [Equation 3] $Energy efficiency \left(%\right) = discharge energy / charge energy \times 100$
(3) Evaluation of voltage efficiency (%): The voltage efficiency was evaluated according to Equation 4 below. [Equation 4] $Voltage efficiency \left(%\right) = energy efficiency / coulombic efficiency \times 100$
(4) Evaluation of R50 (Ω·cm²): R50 was evaluated according to Equation 5 below. [Equation 5] 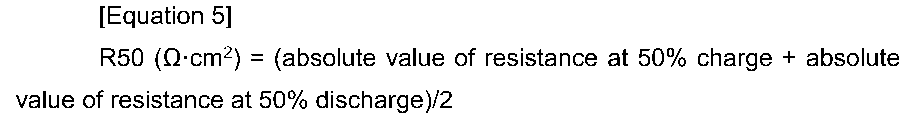 R50 (Ω·cm2) = (absolute value of resistance at 50% charge + absolute value of resistance at 50% discharge)/2

**[Table 4]**

| | Cyclic voltammetry | | | Unit cell performance evaluation | | | |
|---|---|---|---|---|---|---|---|
| | ΔEp (mV) | Cathodic peak intensity (mA/cm²) | Anodic peak intensity (mA/cm²) | Coulombic efficiency (%) | Energy efficiency (%) | Voltage efficiency (%) | R50 (Ω·cm²) |
| Example 1 | 225 | 20.3 | 20.0 | 93.62 | 85.01 | 79.59 | 0.90 |
| Example 2 | 202 | 22.1 | 21.4 | 93.81 | 85.77 | 80.46 | 0.86 |
| Example 3 | 219 | 20.4 | 19.8 | 93.81 | 84.92 | 79.66 | 0.93 |
| Example 4 | 192 | 23.9 | 23.2 | 93.85 | 86.45 | 81.13 | 0.82 |
| Example 5 | 234 | 19.8 | 19.2 | 94.09 | 84.65 | 79.65 | 0.94 |
| Example 6 | 190 | 23.8 | 23.4 | 93.82 | 86.12 | 80.8 | 0.83 |
| Example 7 | 232 | 19.3 | 18.8 | 94.00 | 84.53 | 79.46 | 0.95 |
| Example 8 | 211 | 21.9 | 21.0 | 93.85 | 85.53 | 80.27 | 0.88 |
| Example 9 | 222 | 19.3 | 18.7 | 94.09 | 84.56 | 79.57 | 0.96 |
| Reference Example 1 | 241 | 19.0 | 18.4 | 93.96 | 84.45 | 79.35 | 0.97 |
| Reference Example 2 | 240 | 19.2 | 18.6 | 94.08 | 84.31 | 79.32 | 0.97 |
| Reference Example 3 | 245 | 19.0 | 18.6 | 93.85 | 84.21 | 79.03 | 0.98 |
| Reference Example 4 | 263 | 17.9 | 16.8 | 93.77 | 83.34 | 78.15 | 1.09 |
| Reference Example 5 | 250 | 19.2 | 18.7 | 93.82 | 84.33 | 79.12 | 0.97 |
| Reference Example 6 | 269 | 18.1 | 17.3 | 93.73 | 83.56 | 78.32 | 1.08 |
| Comparative Example 1 | 271 | 17.2 | 16.4 | 94.08 | 82.12 | 77.26 | 1.13 |
| Comparative Example 2 | 262 | 18.9 | 18.8 | 93.70 | 83.94 | 78.65 | 1.01 |

Referring to Table 4 above, when the electrodes for a vanadium redox flow battery prepared in Examples 1 to 9 were used, △Ep was lower, the cathodic peak intensity and anodic peak intensity were higher, both the energy efficiency and voltage efficiency were higher, and R50 was lower, compared to when the electrodes for a vanadium redox flow battery prepared in Reference Examples 1 to 6 and Comparative Examples 1 to 2 were used.

However, when the electrodes for a vanadium redox flow battery prepared in Reference Examples 1 to 6 and Comparative Examples 1 to 2 were used, △Ep was higher, at least one of the cathodic peak intensity and anodic peak intensity was lower, at least one of the energy efficiency and voltage efficiency was lower, or R50 was higher, compared to when the electrodes for a vanadium redox flow battery prepared in Examples 1 to 9 were used.

Although preferred embodiments according to the present disclosure have been described above with reference to the drawings and Examples, these are merely illustrative, and those of ordinary skill in the art will understand that various modifications and other equivalent embodiments can be made therefrom. Therefore, the protection scope of the present disclosure should be defined by the appended claims.

## Claims

1. An electrode for a vanadium redox flow battery, the electrode comprising:
a first carbon fiber having a diameter of 9 to **11** µm; and
a second carbon fiber having a diameter of 6 to 8 µm.

2. The electrode for a vanadium redox flow battery of claim 1, wherein a weight ratio of the first carbon fiber to the second carbon fiber is 50 to 80 : 20 to 50.

3. The electrode for a vanadium redox flow battery of claim 1, wherein the first carbon fiber and the second carbon fiber each independently comprise a polyacrylonitrile (PAN)-based carbon fiber, a rayon-based carbon fiber, a pitch-based carbon fiber, or a combination thereof.

4. The electrode for a vanadium redox flow battery of claim 1, having a thickness of 1 to 5 mm.

5. The electrode for a vanadium redox flow battery of claim 1, wherein a total number of the first carbon fibers and the second carbon fibers per unit weight is 120,000 ea/g or more.

6. The electrode for a vanadium redox flow battery of claim 1, wherein a total surface area of the first carbon fibers and the second carbon fibers per unit weight of the electrode is 1,500 cm²/g or more.

7. The electrode for a vanadium redox flow battery of claim 1, having a density of 0.08 to 0.12 g/cm³.

8. A vanadium redox flow battery comprising the electrode for a vanadium redox flow battery according to any one of claims 1 to 7.
